# EUROPÄISCHE PATENTSCHRIFT

(11) **EP 3 978 344 B1**
(45) Veröffentlichungstag und Bekanntmachung des Hinweises auf die Patenterteilung: **29.04.2026**
(21) Anmeldenummer: 21196448.1
(22) Anmeldetag: 14.09.2021
(51) Int. Cl.: B62K 19/30, B62M 6/80

(54) **FAHRRADRAHMENROHR**
BICYCLE FRAME TUBE
TUBE DE CADRE DE BICYCLETTE

(30) Priorität: 01.10.2020 DE 202020105638 U
(43) Veröffentlichungstag der Anmeldung: 06.04.2022
(73) Patentinhaber: Canyon Bicycles GmbH, 56073 Koblenz (DE)
(72) Erfinder: Thoma, Vincenz, 87538 Obermaiselstein (DE); Schmidt, Patrick, 56068 Koblenz (DE); Parmenter, Christian, 56068 Koblenz (DE)
(74) Vertreter: dompatent

(56) Entgegenhaltungen:
- EP-A1- 1 982 909
- EP-A1- 3 372 482
- CN-U- 205 872 330
- US-A1- 2018 072 379
- US-A1- 2018 241 022

## Beschreibung

Die Erfindung betrifft ein Fahrradrahmenrohr, insbesondere ein Unterrohr eines Fahrradrahmens.

Bei E-Bikes ist es bekannt die Batterie im Fahrradrahmen anzuordnen. Häufig erfolgt ein Anordnen der Batterie im Bereich des Unterrohrs des Fahrradrahmens. Beispielsweise wird die Batterie an einer Außenseite des Unterrohrs fixiert, wobei das Unterrohr eine nach außen weisende Vertiefung aufweisen kann, in der die Batterie fixiert wird. Die Batterie bzw. das Batteriegehäuse ist im Wesentlichen außerhalb des Unterhauses angeordnet. Zum An- und Ausschalten können derartige Batterien unmittelbar an der Batterie bzw. im Batteriegehäuse einen entsprechenden Schalter aufweisen.

Aus DE 10 2016 010 338 und US2020/0062325 ist es ferner bekannt eine Batterie innerhalb des Unterrohrs anzuordnen. Hierzu weist das Unterrohr an seinem tretlagerseitigen Ende eine in Längsrichtung des Unterrohrs weisende Batterieöffnung auf. In diese kann die Batterie von unten eingeschoben werden. Zum An- und Ausschalten der Batterie ist die in dem Unterrohr angeordnete Batterie über eine elektrische Leitung mit einem zusätzlichen elektrischen Schalter verbunden. Der elektrische Schalter kann, beispielsweise am Lenker oder einer Außenseite eines Fahrradrahmenrohrs angeordnet sein. Nachteilig ist bei der bekannten Anordnung der Batterie innerhalb des Unterrohrs, dass eine elektrische Verbindung zum Schalter vorgesehen sein muss.

Ferner ist aus EP 3 372 482 ein Fahrradrahmenrohr mit den Merkmalen des Oberbegriffs des Anspruchs 1 bekannt.

Aufgabe der Erfindung ist es, ein Fahrradrahmenrohr zu schaffen, innerhalb dem eine Batterie angeordnet werden kann, die auf einfache Weise und zuverlässig an- und ausgeschaltet werden kann.

Die Lösung der Aufgabe erfolgt erfindungsgemäß durch ein Fahrradrahmenrohr, insbesondere ein Unterrohr mit den Merkmalen des Anspruchs 1.

Das erfindungsgemäße Fahrradrahmenrohr, bei dem sich insbesondere um ein Unterrohr eines Fahrradrahmens handelt, weist eine Batterieöffnung zum Einsetzen oder Entnehmen einer Batterie auf. Die Batterie kann hierbei selbstverständlich ein Batteriegehäuse aufweisen, das beispielsweise Halterungen zur Fixierung innerhalb des Fahrradrahmenrohrs umfasst. Erfindungsgemäß weist das Fahrradrahmenrohr ferner eine Schalteröffnung auf. In der Schalteröffnung ist ein mechanischer Schalter angeordnet. Erfindungsgemäß kann somit mit diesem in der Schalteröffnung des Fahrradrahmenrohrs angeordneten mechanischen Schalter, ein mechanisches Betätigen eines An-/Aus-Schalters der Batterie erfolgen. Es ist keine elektrische Verbindung zwischen einem elektrischen Schalter und der Batterie erforderlich. Dies hat insbesondere den Vorteil, dass ein zuverlässiges An- und Ausschalten der Batterie möglich ist. Ein bei einer elektrischen Verbindung erforderlicher Steckkontakt, der beim Einschieben der Batterie kontaktiert wird, ist nicht erforderlich. Insofern kann beispielsweise ein Beschädigen oder Korrodieren dieses Kontaktes nicht auftreten.

Erfindungsgemäß weist der mechanische Schalter ein Schaltelement auf. Das Schaltelement wirkt bei montierter, d.h. im Fahrradrahmenrohr angeordneter Batterie mechanisch auf einen an der Batterie vorgesehenen An-/Aus-Schalter ein. Der An-/Aus-Schalter kann auch an einem Batteriegehäuse der Batterie angeordnet sein. Insbesondere umfasst die Batterie neben dem Batteriegehäuse mehrere Zellen, eine Steuerelektronik, Halteelemente und dergleichen. Das Schaltelement wirkt hierbei insbesondere mechanisch auf den An-/Aus-Schalter ein. Vorzugsweise handelt es sich bei dem An-/Aus-Schalter der Batterie um einen Druckschalter und nicht um einen Schiebeschalter.

Des Weiteren ist es bevorzugt, dass der erfindungsgemäße mechanische Schalter ein an einer Außenseite des Fahrradrahmenrohrs angeordnetes Bedienelement zum Betätigen des Schaltelements aufweist. Bei dem Bedienelement handelt es sich in bevorzugter Weiterbildung ebenfalls um ein durch Druck betätigbares Bedienelement. Insbesondere erfolgt das Bedienen durch Drücken des Bedienelements mit einem Finger. In besonders bevorzugter Ausführungsform ist das Bedienelement einstückig mit dem Schaltelement ausgebildet.

Bei einer bevorzugten Weiterbildung der Erfindung ist das Bedienelement über ein Halteelement in der Schalteröffnung des Fahrradrahmenrohrs gehalten. Vorzugsweise ist das Halteelement derart ausgebildet, dass es das Bedienelement in einer Ausgangsposition hält. Insbesondere durch Drücken des Bedienelements durch den Benutzer kann dieses aus der Ausgangsposition in die Betätigungsposition bewegt werden, in der ein mechanisches Schalten des An-/Aus-Schalters der Batterie erfolgt. Vorzugsweise ist das Halteelement derart ausgebildet, dass das Bedienelement nach dem Betätigen automatisch wieder in die Ausgangsposition zurückgeführt wird. Bevorzugt ist es hierbei, dass das Halteelement zumindest teilweise aus einem elastischen Kunststoffmaterial hergestellt ist. Das Bedienelement selbst kann aus einem härteren Kunststoffmaterial hergestellt sein. Besonders bevorzugt ist es, dass das Halteelement eine insbesondere elastische ausgebildetes Verbindungselement aufweist, das das Bedienelement trägt

Vorzugsweise ist das Bedienelement bezogen auf eine Mittelebene des Fahrradrahmenrohrs seitlich versetzt angeordnet. Die Mittelebene des Fahrradrahmenrohrs ist in montiertem Zustand die vertikale Mittelebene des Fahrradrahmens, zu der der Fahrradrahmen im Wesentlichen symmetrisch ausgebildet ist. Ein in bevorzugter Ausführungsform versetztes Anordnen des Bedienelements bezogen auf die Mittelebene hat den Vorteil, dass das Bedienelement insbesondere während der Fahrt einfacher zugänglich ist. Des Weiteren ist es bevorzugt, dass das Bedienelement in der Schalteröffnung asymmetrisch angeordnet ist. Dies hat den Vorteil, dass die Schalteröffnung selbst, bezogen auf die Mittelebene symmetrisch angeordnet sein kann und gleichzeitig ein Versetzen des Bedienelements erfolgt.

Vorzugsweise ist der mechanische Schalter in einem, insbesondere auch während der Fahrt gut zugänglichen Bereich angeordnet. Insbesondere erfolgt daher das Anordnen des mechanischen Schalters in einem Bereich des Fahrradrahmenrohrs, der in der Nähe eines Steuerrohrs des Fahrradrahmens angeordnet ist. Bezogen auf die Länge des Fahrradrahmenrohrs, in dem die Batterie angeordnet ist, ist der mechanische Schalter vorzugsweise in einem vorderen Drittel des Fahrradrahmenrohrs, d.h. in dem in Richtung des Steuerrohrs weisenden Drittel des Fahrradrahmenrohrs angeordnet.

Bei einer besonders bevorzugten Ausführungsform des erfindungsgemäßen Fahrradrahmenrohrs, bei dem es sich insbesondere um ein Unterrohr handelt, ist die Batterieöffnung in Längsrichtung des Fahrradrahmenrohrs angeordnet. Das Einsetzen oder Entnehmen der Batterie erfolgt somit vorzugsweise in Längsrichtung des Fahrradrahmenrohrs. Besonders bevorzugt ist es insbesondere, wenn es sich bei dem Fahrradrahmenrohr um ein Unterrohr handelt, dass die Batterieöffnung tretlagerseitig angeordnet ist. Insbesondere ist die BatterieÖffnung durch das tretlagerseitige Ende des Unterrohrs ausgebildet. Die Batterie kann somit im Bereich des Tretlagers durch die Batterieöffnung von unten in das Unterrohr eingesetzt werden.

Ferner betrifft die Erfindung einen Fahrradrahmen mit einer Motoraufnahme für einen Elektromotor. Der Fahrradrahmen weist mehrere Rahmenrohre, insbesondere ein Oberrohr, ein Unterrohr, ein Sattelrohr und ein Steuerrohr auf. Zumindest eines der Rahmenrohre ist wie vorstehend beschrieben ausgebildet und weist insbesondere den vorstehend beschriebenen mechanischen Schalter auf. Vorzugsweise ist in dem Fahrradrahmenrohr eine Batterie angeordnet, bzw. einsetzbar, die elektrisch mit dem Elektromotor verbunden ist. Bevorzugt ist es hierbei, dass die Batterie, insbesondere ein Batteriegehäuse der Batterie, einen An-/Aus-Schalter aufweist, der mit dem mechanischen Schalter, insbesondere dem Schaltelement des mechanischen Schalters zusammenwirkt. Vorzugsweise handelt es sich bei dem An-/Aus-Schalter der Batterie um einen Druckschalter.

Gemäß einer unabhängigen Erfindung ist in einem Fahrradrahmenrohr, bei dem sich insbesondere um ein Unterrohr handelt, eine Batterie insbesondere wie vorstehend beschrieben von unten einschiebbar. Gemäß dieser unabhängigen Erfindung ist an dem unteren Ende der Batterie, insbesondere an dem Batteriegehäuse der Batterie, ein Ladestecker sowie ein Ladezustands-Anzeiger vorgesehen. Das untere Ende der Batterie ist das bei in das Unterrohr eingeschobener Batterie in der Nähe des Tretlagers angeordnete Ende der Batterie. Der Ladestecker dient zum Anschließen eines Stromkabels zum Laden der Batterie. Erfindungsgemäß ist benachbart zu dem Ladestecker der Ladezustands-Anzeiger vorgesehen. Insbesondere weist der Ladezustands-Anzeiger mehrere LEDs auf. In Abhängigkeit des Ladezustands leuchtet eine unterschiedliche Anzahl an LEDs. Das Anordnen des Ladezustands-Anzeigers unmittelbar in der Nähe des Ladesteckers hat den Vorteil, dass der Benutzer unmittelbar beim Einstecken des Ladesteckers ein visuelles Feedback über den Ladezustand der Batterie erhält, ohne beispielsweise auf eine andere Einheit sehen zu müssen oder das System anschalten oder ein entsprechendes Anzeigesystem anschließen zu müssen.

In bevorzugter Weiterbildung dieser Erfindung ist der Ladestecker sowie auch der Ladezustands-Anzeiger hinter einer Abdeckung angeordnet. Durch die Abdeckung sind während des Betriebes der Stecker sowie der Ladezustands-Anzeiger vor Verschmutzung geschützt

Es ist in bevorzugter Weiterbildung diese Erfindung nicht erforderlich, dass der unmittelbar neben dem Ladestecker vorgesehenen Ladezustands-Anzeiger sichtbar ist, da der Ladezustand der Batterie während des Betriebs vorzugsweise in einem am Lenker angeordneten Display angezeigt wird. Dies ist vorteilhaft, da somit während der Fahrt jederzeit der Ladezustand der Batterie einfach ablesbar ist.

Die Batterie weist vorzugsweise einen An-/Aus-Schalter auf wie vorstehend beschrieben. Ferner weist die Batterie neben dem Ladestecker einen Stecker zur Verbindung mit dem Elektromotor auf. Bevorzugt ist es daher, dass bei eingestecktem Motorstecker mit Hilfe des An-/Aus-Schalters das System angeschaltet werden kann. Gleichzeitig fährt das Display, das insbesondere am Lenker angeordnet ist, hoch, sodass das Fahrrad fahrbereit ist. In diesem Zustand sind der Ladestecker und der Ladezustands-Anzeiger vorzugsweise durch die Abdeckung verdeckt.

Sobald der Ladestecker eingesteckt ist, wird von dem Ladezustands-Anzeiger der Ladezustand angezeigt. Wenn weder der Motorstecker noch der Ladestecker eingesteckt ist, ist es möglich durch Drücken des An-/Aus-Schalters der Batterie den aktuellen Ladezustand der Batterie abzufragen. Dieser wird sodann wieder über den Ladezustands-Anzeiger angezeigt.

In besonders bevorzugter Ausführungsformen ist die Erfindung betreffend den Ladestecker und die Anordnung des Ladezustands-Anzeigers mit der vorstehend beschriebenen Erfindungen betreffend das Anordnen eines mechanischen Schalters in dem Fahrradrahmenrohr kombiniert und vorteilhaft durch die geschilderte bevorzugten Ausführungsformen weiterentwickelt.

Nachfolgend wird die Erfindung anhand einer bevorzugten Ausführungsform unter Bezugnahme auf die anliegenden Zeichnungen näher erläutert.

Es zeigen:
- Figur 1: eine schematische Seitenansicht eines Fahrradrahmens,
- Figur 2: eine schematische Draufsicht eines Unterrohrs im Bereich des Schalters,

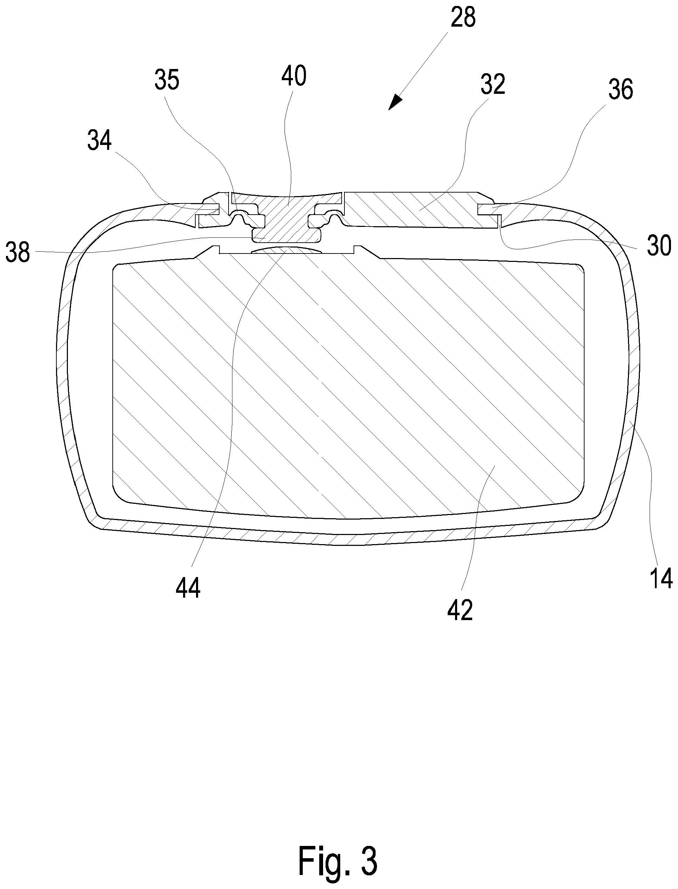

- Figur 3: eine schematische Schnittansicht des Unterrohrs entlang der Linie III-III in Figur 2 und

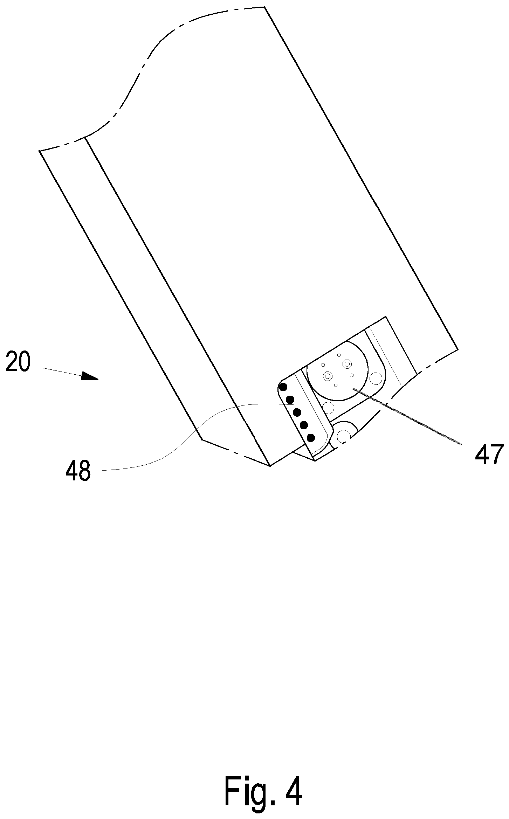

- Figur 4: eine schematische Seitenansicht des Unterrohrs im Bereich des Tretlagers.

Ein Fahrradrahmen weist üblicherweise ein Oberrohr 10, ein mit dem Oberrohr 10 verbundenes Sattelrohr 12, ein Unterrohr 14 sowie ein mit dem Oberrohr 10 und dem Unterrohr 14 verbundenes Steuerrohr 16 auf. Ferner ist ein Tretlageroder Motorgehäuse 18 vorgesehen, das zur Aufnahme eines Elektromotors des Tretlagers dient. Es sind auch andere Rahmengeometrien bekannt. Im dargestellten Ausführungsbeispiel ist das Unterrohr 14 derart angeordnet, dass ein tretlagerseitiges Ende 20 des Unterrohrs 14 eine Batterieöffnung 22 aufweist. Die Batterieöffnung 22 ist somit bezogen auf eine Längsrichtung 24 des Unterrohrs 14 angeordnet. In die Batterieöffnung 22 kann im dargestellten Ausführungsbeispiel von unten in Längsrichtung 24 eine Batterie in das Unterrohr 14 eingeschoben werden.

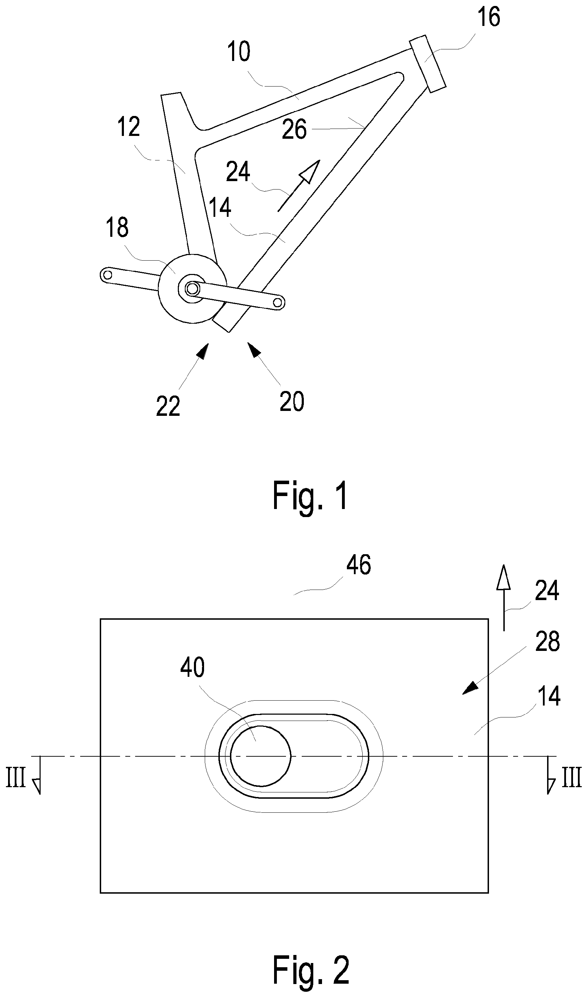

An einer Oberseite 26 des Unterrohrs 14 ist im dargestellten Ausführungsbeispiel in einem Bereich des Unterrohrs 14 der in Richtung des Steuerrohrs 16 weist, ein mechanischer Schalter 28 (Figur 2) angeordnet. Der mechanische Schalter 28 ist in einer in dem Unterrohr 14 vorgesehenen Schalteröffnung angeordnet. Hierzu weist der Schalter 28 ein, insbesondere aus elastischem Material hergestelltes Halteelement 32 auf. Das Halteelement 32 weist eine Nut 34 auf, die mit einem Ansatz 36 zusammenwirkt. Hierdurch ist das Halteelement 32 in der Öffnung 30 gehalten. Das Halteelement 32 trägt ein Schaltelement 38, das im dargestellten Ausführungsbeispiel einstückig mit einem Bedienelement 40 ausgebildet ist. Hierzu weist das Halteelement 32 ein aus elastischem Material hergestelltes Verbindungselement 35 auf, das das Bedienelement 40 trägt. Das Bedienelement 40 weist an der Oberseite eine Mulde auf, so dass das Bedienelement 40 auf einfache Weise mit dem Finger nach innen in Richtung einer innerhalb des Unterrohrs 14 angeordneten Batterie 42 bewegt werden kann. Aufgrund der Elastizität des Haltelements 32 kann das Bedienelement zum Betätigen eines An-/Aus-Schalters 44 der Batterie 42 aus seiner Ausgangsposition nach innen gedrückt werden und gelangt automatisch wieder aus der Betätigungsposition in die Ausgangsposition zurück.

Bezogen auf eine Rahmenmittelebene 46 (Figur 2) ist das Bedienelement asymmetrisch bzw. seitlich versetzt angeordnet. Die Schalteröffnung 30 ist in im dargestellten Ausführungsbeispiel im Wesentlichen oval ausgebildet, bzw. hat senkrecht zur Rahmenmittelebene 46 eine größere Ausdehnung als in Längsrichtung 24 des Unterrohrs 14. Die Schalteröffnung 30 ist somit zur Rahmenmittelebene 46 symmetrisch.

Bei einer weiteren bevorzugten Ausführungsform, die insbesondere mit der vorstehend beschriebenen Ausführungsform kombiniert wird, ist im Bereich des unteren Endes 20 des Unterrohrs, d. h. im tretlagerseitigen Bereich des Unterrohrs ein Ladestecker 47 vorgesehen. Der Ladestecker 47 ist Teil der Batterie 42. Durch Einstecken eines Ladekabels in den Ladestecker 47 kann die Batterie 42 geladen werden. Unmittelbar neben dem Ladestecker 47 befindet sich ein mehrere LEDs aufweisender Ladezustands-Anzeiger 48. Sowohl der Ladestecker 47 als auch der Ladezustands-Anzeiger 48 können mit einem nicht dargestellten Deckel bzw. einer Abdeckung verschlossen sein.

Beim Einstecken eines Stromkabels in den Ladestecker 47 wird über den Ladezustands-Anzeiger 48 der aktuelle Ladezustand der Batterie 42 angezeigt.

Ferner ist es möglich bei nicht eingestecktem Motorstecker, d.h. wenn keine Verbindung zwischen der Batterie 42 und dem Elektromotor besteht, das Bedienelement 40 oder unmittelbar den An-/Ausschalter 44 zu betätigen. Hierdurch wird, auch wenn kein Ladekabel im Ladestecker 47 angeordnet ist, über den Ladezustands-Anzeiger 48 der Ladezustand angezeigt. Dies kann beispielsweise als auch bei demontierter Batterie auf einfache Weise erfolgen.

## Patentansprüche

1. Fahrradrahmenrohr, insbesondere Unterrohr, mit
einer Batterie (42)
einer Batterieöffnung (22) zum Einsetzten oder Entnehmen der Batterie (42), einer Schalteröffnung (30) und
einem in der Schalteröffnung (30) angeordneten mechanischen Schalter (28), **dadurch gekennzeichnet, dass**
der Schalter (28) ein Schaltelement (38) aufweist, das bei montierter Batterie (42) mechanisch auf einen an der Batterie (42) vorgesehenen An-/AusSchalter (44) einwirkt.

2. Fahrradrahmenrohr nach Anspruch 1, **dadurch gekennzeichnet, dass** der Schalter (28) ein an einer Außenseite (26) des Fahrradrahmenrohrs (14) angeordnetes Bedienelement (40) zum Betätigen des Schaltelements (38) aufweist.

3. Fahrradrahmenrohr nach Anspruch 1, **dadurch gekennzeichnet, dass** das Bedienelement (40) mit dem Schaltelement (38) einstückig ausgebildet ist.

4. Fahrradrahmenrohr nach Anspruch 2 oder 3, **dadurch gekennzeichnet, dass** das Bedienelement (40) über ein Halteelement (32) in der Schalteröffnung (30) gehalten ist.

5. Fahrradrahmenrohr nach Anspruch 4, **dadurch gekennzeichnet, dass** das Halteelement (32) derart ausgebildet ist, dass es das Bedienelement (40) in einer Ausgangsposition hält und aus einer Betätigungsposition automatisch in die Ausgangsposition zurückführt.

6. Fahrradrahmenrohr nach Anspruch 4 oder 5, **dadurch gekennzeichnet, dass** das Halteelement (32) zumindest teilweise, insbesondere ein Verbindungselement (35) des Haltelements (32) aus elastischem Material hergestellt ist bzw. elastisch ausgebildet ist, wobei das Verbindungselement (35) vorzugsweise das Bedienelement (40) trägt.

7. Fahrradrahmenrohr nach einem der Ansprüche 2-6, **dadurch gekennzeichnet, dass** das Bedienelement (40) bezogen auf eine Mittelebene (46) des Fahrradrahmens seitlich versetzt angeordnet ist.

8. Fahrradrahmenrohr nach einem der Ansprüche 2-7, **dadurch gekennzeichnet, dass** das Bedienelement (40) asymmetrisch in der Schalteröffnung (30) angeordnet ist.

9. Fahrradrahmenrohr nach einem der Ansprüche 1-8, **dadurch gekennzeichnet, dass** der Schalter (28) in einen Bereich des Fahrradrahmenrohrs, insbesondere des Unterrohrs angeordnet ist, der in der Nähe eines Steuerrohrs (16) des Fahrradrahmens angeordnet ist.

10. Fahrradrahmenrohr nach einem der Ansprüche 1-9, **dadurch gekennzeichnet, dass** die Batterieöffnung (22) in Längsrichtung (24) des Fahrradrahmenrohrs (14) angeordnet ist.

11. Fahrradrahmenrohr nach einem der Ansprüche 1-10, **dadurch gekennzeichnet, dass** die Batterieöffnung (22) tretlagerseitig angeordnet ist, insbesondere dass tretlagerseitige Ende (22) des Unterrohrs (14) ausbildet.

12. Fahrradrahmen, mit einer Motoraufnahme (18) zur Aufnahme eines Elektromotors und mehreren Rahmenrohren (10, 12, 14, 16), wobei zumindest eines der Rahmenrohre (14) als Fahrradrahmenrohr nach einem der Ansprüche 1-11 ausgebildet ist.

13. Fahrradrahmen nach Anspruch 12, mit einer in dem Fahrradrahmenrohr (14) angeordneten Batterie (42), die elektrisch mit dem Elektromotor verbunden ist.

14. Fahrradrahmen nach Anspruch 13, **dadurch gekennzeichnet, dass** die Batterie (42), insbesondere ein Batteriegehäuse einen An-/Aus-Schalter (44) aufweist, der mit dem mechanischen Schalter (28), insbesondere dem Schaltelement (38) zusammenwirkt.

## Claims

1. A bicycle frame tube, in particular a down tube, comprising a battery (42),
a battery opening (22) for inserting or removing the battery (42),
a switch opening (30), and
a mechanical switch (28) arranged in the switch opening (30),
**characterized in that**
the switch (28) comprises a switching element (38) which, with the battery (42) mounted, mechanically acts upon an on/off switch (44) provided at the battery (42).

2. The bicycle frame tube according to claim 1, **characterized in that** the switch (28) comprises an operating element (40) arranged on an outside (26) of the bicycle frame tube (14) for actuating the switching element (38).

3. The bicycle frame tube according to claim 1, **characterized in that** the operating element (40) is integrally formed with the switching element (38).

4. The bicycle frame tube according to claim 2 or 3, **characterized in that** the operating element (40) is held in the switch opening (30) via a holding element (32).

5. The bicycle frame tube according to claim 4, **characterized in that** the holding element (32) is configured such that it holds the operating element (40) in an initial position and automatically returns it from an actuating position into the initial position.

6. The bicycle frame tube according to claim 4 or 5, **characterized in that** the holding element (32), in particular a connecting element (35) of the holding element (32), is at least partially made from an elastic material or is of an elastic configuration, wherein the connecting element (35) preferably supports the operating element (40).

7. The bicycle frame tube according to any one of claims 2-6, **characterized in that** the operating element (40) is laterally offset relative to a center plane (46) of the bicycle frame.

8. The bicycle frame tube according to any one of claims 2-7, **characterized in that** the operating element (40) is asymmetrically arranged in the switch opening (30).

9. The bicycle frame tube according to any one of claims 1-8, **characterized in that** the switch (28) is arranged in an area of the bicycle frame tube, in particular the down tube, which is arranged in the vicinity of a head tube (16) of the bicycle frame.

10. The bicycle frame tube according to any one of claims 1-9, **characterized in that** the battery opening (22) is arranged in the longitudinal direction (24) of the bicycle frame tube (14)

11. The bicycle frame tube according to any one of claims 1-10, **characterized in that** the battery opening (22) is arranged on the bottom bracket side, in particular constitutes the bottom-bracket-side end (22) of the down tube (14).

12. A bicycle frame comprising a motor accommodating unit (18) for accommodating an electric motor and a plurality of frame tubes (10, 12, 14, 16), wherein at least one of the frame tubes (14) is configured as a bicycle frame tube according to any one of claims 1-11.

13. The bicycle frame according to claim 12, comprising a battery (42) arranged in the bicycle frame tube (14), which battery is electrically connected to the electric motor

14. The bicycle frame according to claim 13, **characterized in that** the battery (42), in particular a battery housing, comprises an on/off switch (44) which cooperates with the mechanical switch (28), in particular the switching element (38).

## Revendications

1. Tube de cadre de bicyclette, en particulier tube oblique, comportant une batterie (42)
une ouverture pour batterie (22) permettant d'insérer ou de retirer la batterie (42), une ouverture pour commutateur (30), et
un commutateur (28) mécanique disposé dans l'ouverture pour commutateur (30), **caractérisé en ce que**
le commutateur (28) présente un élément de commutation (38) qui, lorsque la batterie (42) est montée, agit mécaniquement sur un commutateur marche/arrêt (44) prévu sur la batterie (42).

2. Tube de cadre de bicyclette selon la revendication 1, **caractérisé en ce que** le commutateur (28) présente un élément de manipulation (40) disposé sur un côté extérieur (26) du tube de cadre de bicyclette (14) et permettant d'actionner l'élément de commutation (38).

3. Tube de cadre de bicyclette selon la revendication 1, **caractérisé en ce que** l'élément de manipulation (40) est réalisé d'une seule pièce avec l'élément de commutation (38).

4. Tube de cadre de bicyclette selon la revendication 2 ou 3, **caractérisé en ce que** l'élément de manipulation (40) est maintenu dans l'ouverture pour commutateur (30) par l'intermédiaire d'un élément de maintien (32).

5. Tube de cadre de bicyclette selon la revendication 4, **caractérisé en ce que** l'élément de maintien (32) est réalisé de telle sorte qu'il maintient l'élément de manipulation (40) dans une position initiale et le ramène automatiquement dans la position initiale à partir d'une position d'actionnement.

6. Tube de cadre de bicyclette selon la revendication 4 ou 5, **caractérisé en ce que** l'élément de maintien (32), en particulier un élément de liaison (35) de l'élément de maintien (32), est fabriqué au moins partiellement en un matériau élastique ou est réalisé de manière élastique, dans lequel l'élément de liaison (35) porte de préférence l'élément de manipulation (40).

7. Tube de cadre de bicyclette selon l'une des revendications 2 à 6, **caractérisé en ce que** l'élément de manipulation (40) est décalé latéralement par rapport à un plan médian (46) du cadre de bicyclette.

8. Tube de cadre de bicyclette selon l'une des revendications 2 à 7, **caractérisé en ce que** l'élément de manipulation (40) est disposé de manière asymétrique dans l'ouverture pour commutateur (30).

9. Tube de cadre de bicyclette selon l'une des revendications 1 à 8, **caractérisé en ce que** le commutateur (28) est disposé dans une zone du tube de cadre de bicyclette, en particulier du tube oblique, qui est disposée à proximité d'un tube de direction (16) du cadre de bicyclette.

10. Tube de cadre de bicyclette selon l'une des revendications 1 à 9, **caractérisé en ce que** l'ouverture pour batterie (22) est disposée dans la direction longitudinale (24) du tube de cadre de bicyclette (14).

11. Tube de cadre de bicyclette selon l'une des revendications 1 à 10, **caractérisé en ce que** l'ouverture pour batterie (22) est disposée côté boîtier de pédalier, en particulier réalise l'extrémité (22) côté boîtier de pédalier du tube oblique (14).

12. Cadre de bicyclette, comportant un logement pour moteur (18) permettant de recevoir un moteur électrique et plusieurs tubes de cadre (10, 12, 14, 16), dans lequel au moins l'un des tubes de cadre (14) est réalisé sous forme de tube de cadre de bicyclette selon l'une des revendications 1 à 11.

13. Cadre de bicyclette selon la revendication 12, comportant une batterie (42) disposée dans le tube de cadre de bicyclette (14) et connectée électriquement au moteur électrique.

14. Cadre de bicyclette selon la revendication 13, **caractérisé en ce que** la batterie (42), en particulier une boîte pour batterie, présente un commutateur marche/arrêt (44) qui coopère avec le commutateur (28) mécanique, en particulier avec l'élément de commutation (38).
